(19) Europäisches Patentamt

European Patent Office

Office européen des brevets

(11) **EP 2 635 486 B1**

(12) **EUROPEAN PATENT SPECIFICATION**

(45) Date of publication and mention
of the grant of the patent:
**10.12.2014 Bulletin 2014/50**

(51) Int Cl.:
***B62M 3/08*** *(2006.01)*  ***B62M 6/50*** *(2010.01)*

(21) Application number: **11797113.5**

(86) International application number:
**PCT/IB2011/002654**

(22) Date of filing: **27.10.2011**

(87) International publication number:
**WO 2012/059812 (10.05.2012 Gazette 2012/19)**

(54) **BODY FOR INSTRUMENTED PEDAL AND PRODUCTION PROCESS THEREOF**

KÖRPER FÜR INSTRUMENTIERTES PEDAL UND HERSTELLUNGSVERFAHREN DAFÜR

CORPS POUR PÉDALE D'INSTRUMENT ET SON PROCÉDÉ DE PRODUCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.11.2010 IT RM20100588**

(43) Date of publication of application:
**11.09.2013 Bulletin 2013/37**

(73) Proprietors:
• **Universita' Degli Studi Roma Tre
00163 Roma (IT)**
• **ELITE S.R.L.
I-35014 Fontaniva (Padova) (IT)**

(72) Inventors:
• **D'ALESSIO, Tommaso
I-00146 Rome (IT)**

• **CONFORTO, Silvia
I-00146 Rome (IT)**
• **SCHMID, Maurizio
I-00146 Rome (IT)**
• **BIBBO, Daniele
I-00146 Rome (IT)**

(74) Representative: **Romano, Giuseppe et al
Società Italiana Brevetti S.p.A
Piazza di Pietra, 39
00186 Roma (IT)**

(56) References cited:
**WO-A1-2010/109397     CN-Y- 201 189 940
US-A1- 2006 248 965**

EP 2 635 486 B1

**Description**

The present invention relates to a body for an instrumented pedal and to a process for its manufacturing. The present invention further relates to an instrumented pedal, which enables, by associating to said body a system for detecting and processing quantities related to a pedal stroke, to avail oneself in real time of a monitoring of the power and of an assessment of the efficiency of the pedal stroke itself.

**History of the Technology**

Systems for power monitoring and for assessing pedal stroke efficiency directly coupled to the pedal of a bicycle are known in the art.

**Description of the Prior Art**

Prior systems for measuring the pedal stroke present in the literature envisage the interposition of a marketed or specifically made load cell between the quick coupler of the cyclist's cycling shoe and the system for anchoring the pedal to the pedal crank. As is known, pressure exterted by a cyclist on the pedal body is unloaded directly on the load cell by the constraining reaction afforded just by the anchoring system on the cell itself. A system of extensimeters suitably arranged on the cell is able to measure its deformation, and therefore trace the load applied thereon. Measurement of the tilt angle between the pedal body and the system for anchoring to the pedal crank is typically obtained by a rotary encoder interposed between the pedal body, integral to the cycling shoe, and the axis of rotation integral to the pedal crank. These two elements are connected, in any one instrumented or non-instrumented bicycle pedal, by rolling or sliding bearings, or by bearings which however allow exclusively relative rotation with respect to a common axis, blocking all other degrees of freedom in space. A body for instrumented pedal for a bicycle according to the preamble of claim 1 is known from the document CN201189940Y

**Drawbacks of the Prior Art**

The known-art systems mentioned above, though commonly used to date, entail remarkable drawbacks.
Known-art systems, which envisage just the coupling of a load cell to a pedal body, in no way can be manufactured by a pressure die-casting molding process, as they normally have one or more undercuts which would make their drawing from the mould impossible.
Moreover, in cases in which the block constituting the load cell is positioned within a flange for connecting to the shaft-pedal crank system, the making of a through opening into said block, to obtain thereon vertical regions needed for deformation measurement, proves practically impossible other than by extremely complicated and therefore costly processes.
Lastly, such manufacturings unavoidably entail an increase in dimensions with respect to a non-instrumented pedal, with a consequent and unavoidable increase in the weight thereof.

**Objects of the Invention**

Object of the present invention is to solve the above-mentioned drawbacks by providing a body for instrumented pedal as substantially defined in claim 1, and an instrumented pedal as substantially defined in claim 13.
A further object of the present invention is to provide a production process of the body for instrumented pedal as substantially defined in claim 10.
Further features of the invention are defined in the corresponding dependent claims thereof.

**Advantages of the Invention**

The present invention, by overcoming the mentioned problems of the known art, entails several evident advantages.
The body for instrumented pedal subject of the present invention has a geometry such as not to have undercuts, which otherwise would not allow body production by a pressure die-casting molding process. Such a geometry is attained, as will be made evident in the detailed description of two preferred embodiments thereof, in spite of the fact that the body subject of the invention comprises portions configured for detecting loads acting on the pedal.
Advantageously, the option of using a pressure die-casting process makes a mass production possible, drastically reducing its times and costs with respect to the manufacturing of instrumented pedals of a type known to date.
It will be appreciated that the body subject of the present invention could alternatively be manufactured also by chip-forming machining.

Ultimately, the instrumented pedal according to the invention has mechanical and geometric features such as to be as near as possible in shape, weight and size to a marketed-type pedal.

In fact, the instrumented pedal is manufactured so as to minimize weight and size: the pedal body, excluding the shaft for connecting with the pedal crank and the fitting for anchoring to the spring of the cycling shoe, was contrived and manufactured in one piece, which has some portions whose deformations are associated, by a univocal relationship, to the load applied in the part of the pedal itself contacting the cycling shoe.

The angle of the body with respect to the shaft is preferably measured by a Hall effect encoder, entailing the use of a magnet integral to the pedal shaft and housed at its end opposite to the pedal crank, facing (not in direct contact with) a built-in electronic component, integral to the body and able to detect magnetic field variations, i.e. relative rotation between shaft and body.

The body according to the invention is compatible with axis-bearings systems of standard typology, which ensure attaching to the pedal crank analogously to what is had for the attaching of non-instrumented pedals available on the market.

Moreover, the pedal according to the invention is compatible with cleats of standard typology, like e.g. of SPD-SL type for cycling shoes, where for "cleat" it is generally meant a plastics element, fixed onto the sole of the cycling shoe, which has the function of anchoring the latter to coupling/releasing means, obtained instead on the pedal.

Another advantage of the instrumented pedal subject of the invention consists in the option of housing, built-in the body of the pedal itself, the electronics for collecting signals from sensors that are located on the above-mentioned sensitive portions, for the conditioning and retrasmission in wireless mode of said signals.

Moreover, the electronics aboard is capable of calculating synthetic parameters derived from force and angle measurements, and of sending them likewise to a station receiving also in a mode compatible with commercial standards for wireless transmissions (ANT/ ANT+).

Therefore, the pedal according to the invention entails the option of using a shaft and the related bearings, needed to operate the rotatable connection between shaft and body, of size, shape and weight comparable with the solutions adopted on commercial pedals to date available but non-instrumented.

Moreover, the compactness of the geometry defined allows to house the electronics into the front part of the pedal. Also the coupling for the cleat is compatible with standard-type cleats, thereby allowing a greater use of already well-tested commercial components.

Lastly, the instrumented pedal will preferably be covered by a plastics carter in the underlying portion, to protect from environmental stresses the sensitive zone, the shaft, the encoder system, the electronics and the required power batteries.

Preferably, one or more switches, required for activation/deactivation and for pedal configuration, and optional signaling LEDs could be present on the external carter. According to a preferred embodiment the body subject of the invention, made e.g. of aluminum alloy, affords a weight of about 60 g.

By adding up the weights of all other components required, as will be made evident hereinafter, about 175 g are reached.

Considering an overall weight of 25 g for the electronics, batteries and plastics carter, the overall weight of the instrumented pedal is in the neighborhood of 200 g, therefore quite close to and slightly greater than the weight of a commercial non-instrumented pedal, whose weight is equal to about 175g.

## Brief Description of the Drawings

Yet further advantages, as well as the features and operation steps of the present invention will be made evident in the following detailed description of two preferred embodiments thereof, given by way of example and not for limitative purposes. Reference will be made to the figures of the annexed drawings, wherein:

Figures 1-7 depict in a perspective view a body for instrumented pedal subject of the present invention according to a first embodiment thereof;
Figures 8-9 depict in a perspective view a body for instrumented pedal subject of the present invention according to a second embodiment thereof;
Figures 10-12 depict various views of the body for instrumented pedal according to the second embodiment thereof;
Figure 13 depict various views of the body for instrumented pedal according to the first embodiment thereof;
Figure 14 depicts a perspective view of an instrumented pedal subject of the present invention;
Figures 15-20 show an exemplary embodiment of the instrumented pedal of the preceding figure.

## Detailed description of the drawings

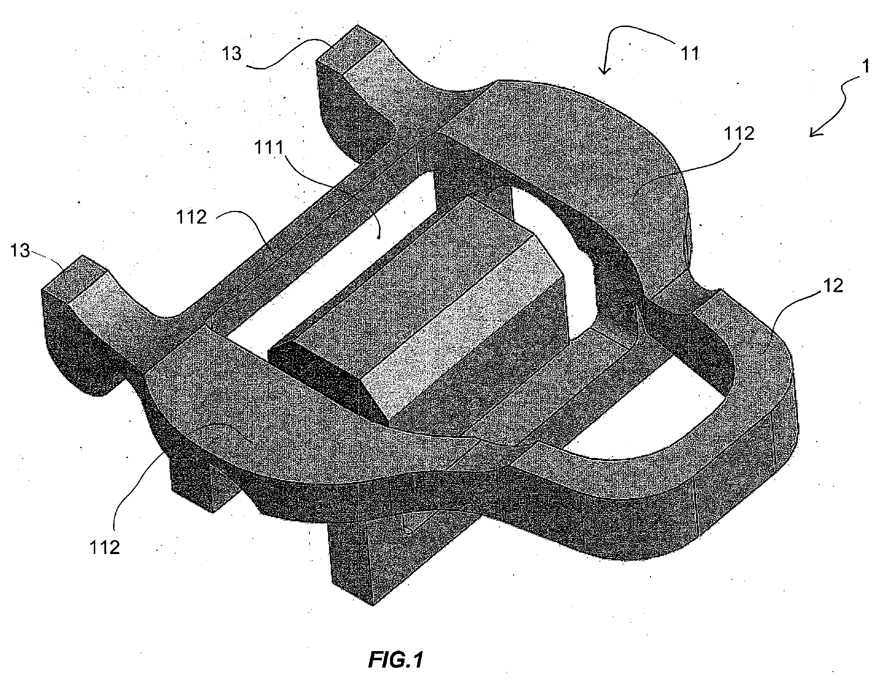

Referring to Figure 1, a body 1 for instrumented pedal according to a preferred embodiment thereof is shown in a perspective view.

The body 1 has a top resting portion 11 which defines a plane base on which, in use, the cyclist sets his/her cycling shoe to perform the pedal stroke. The resting portion 11 has a through opening 111 delimiting a peripheral area 112 thereof. In particular, in this first embodiment the opening 111 is such as to give to the peripheral area 112 a substantially C-like shape.

Preferably, the body 1 comprises coupling/releasing means for the cycling shoe. Such means comprises a C-shaped coupler 12 for front coupling, and a seat for the attaching of a movable element for anchoring the rear part of the cycling shoe cleat, made by a pair of block-like members 13 facing each other.

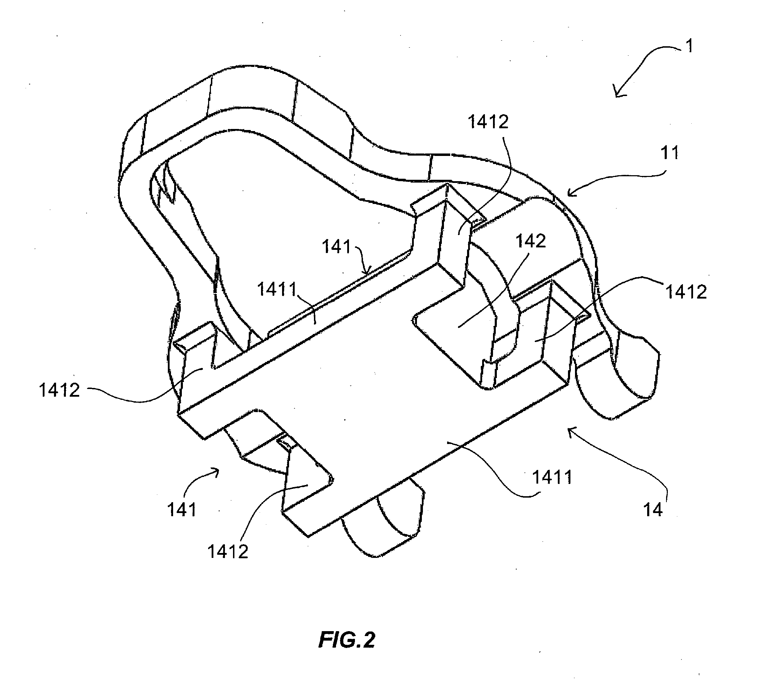

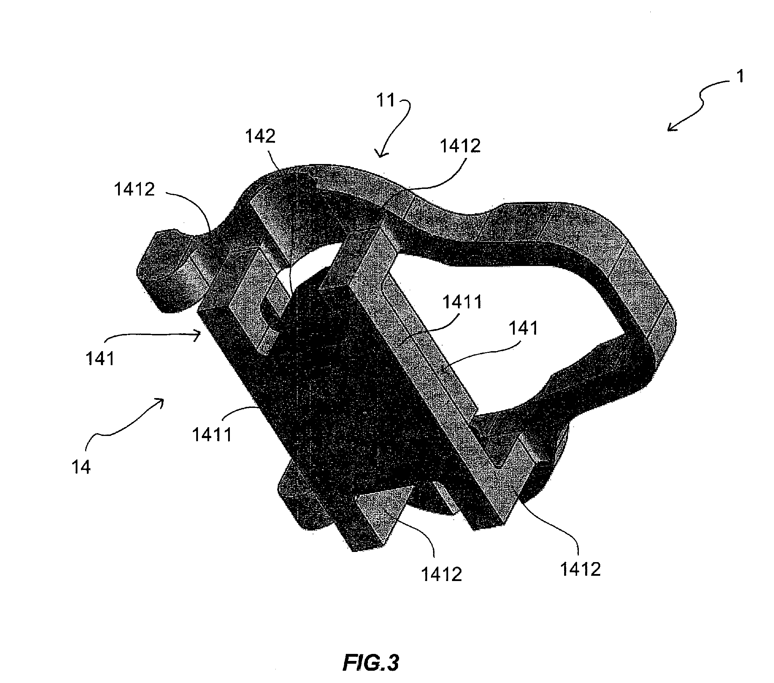

Making reference to next Figures 2 and 3, which show the body 1 in a bottom perspective view, the body 1 comprises a bottom block 14, rigidly connected to the top portion 11.

In particular, the bottom block 14 comprises a pair of elements or members 141, each one being substantially U-shaped. In particular, each U-shaped element comprises a longitudinal cross member 1411, arranged parallelly with respect to the plane base individuated by the resting portion 11, and a pair of vertical portions 1412 connected to the top resting portion 11 at the above-introduced peripheral area.

The two U-shaped elements 141 define along the vertical portions 1412 four regions measuring deformation associated to a pedal stroke load, applied by a cyclist on the resting portion 11 of the body 1.

The bottom block 14 further comprises a central component 142, interposed between the two elements 141 and connected thereto along the respective longitudinal cross members 1411. The component 142 is required, as will be made evident hereinafter, for housing a shaft associated to the pedal crank of a bicycle.

As can be seen from Figures 1-3, the longitudinal cross members 1411 and the central component interposed between them are configured so as to be contained within a port defined by the through opening 111.

Such a geometry, beside giving to the body weight and size remarkably reduced with respect to instrumented pedals in spite of the fact that it comprises portions configured so as to be able to detect their deformations, portions which entail a remarkable encumbrance, enables piece production also by a pressure die-casting molding process.

In fact, said configuration has no undercuts, which would prevent a drawing of the body from the mould upon carrying out the casting and the subsequent cooling.

The central component 142 is preferably spaced from the plane base defined by the top portion, and is therefore arranged with respect to the plane base singled out by the resting portion at a lower level. In particular, it has a top surface which faces thereon and is parallel thereto.

Thus, it is ensured that the load applied to the resting surface be discharged solely on the vertical portions 1412 and then measured. Otherwise, should the load be imparted also on the component, a fraction thereof would not be detected anymore, as discharged directly on the shaft housed therein.

Object of the present invention is also to provide a production process for the manufacturing of a body for instrumented pedal, comprising a first step of manufacturing the body 1 as illustrated in the preceding figures. As highlighted above, the body 1 is preferably manufacturable by a pressure die-casting molding process.

Alternatively, the body 1 could be manufactured by chip-forming machining.

Such machining typologies are *per se* well-known to persons skilled in the art, and therefore a detailed description thereof will not be given.

Therefore, the process subject of the invention provides a step of making a bore, preferably a through bore, into the central component, and obtained along a direction substantially parallel to the longitudinal cross members. A shaft, associable to a pedal crank of the bicycle, is then rotatably housed within the bore. Such housing is typically made by interposition of one or more bearings, e.g. of ball type, between component and shaft.

The through bore is preferably obtained into the central component by chip-forming machining.

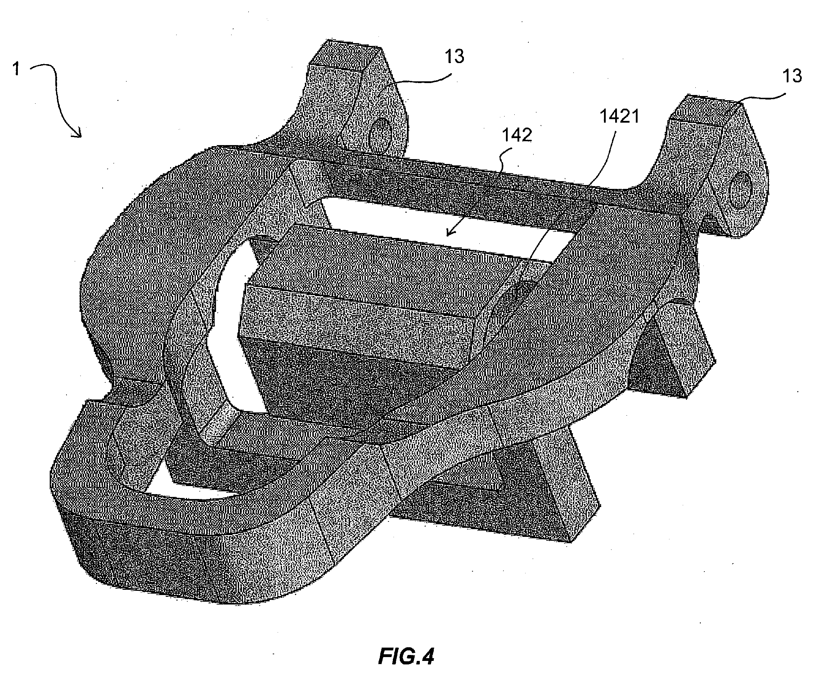

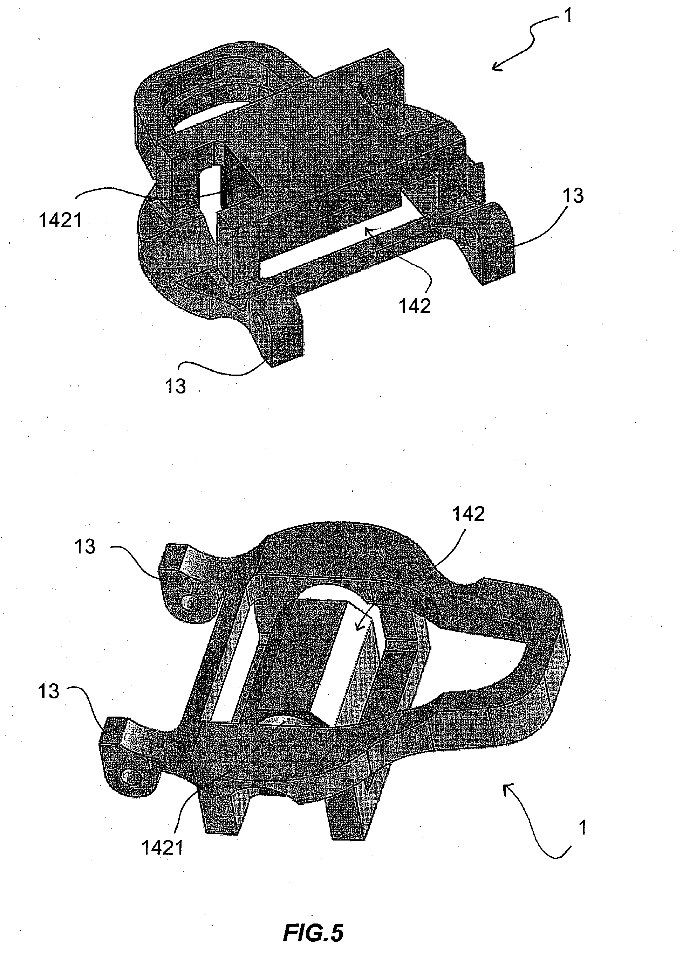

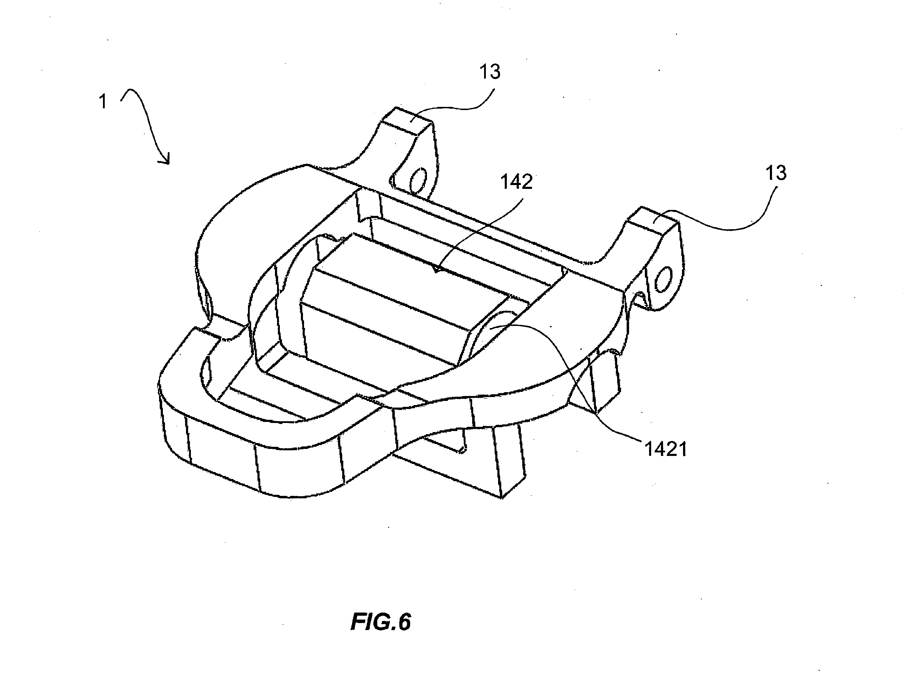

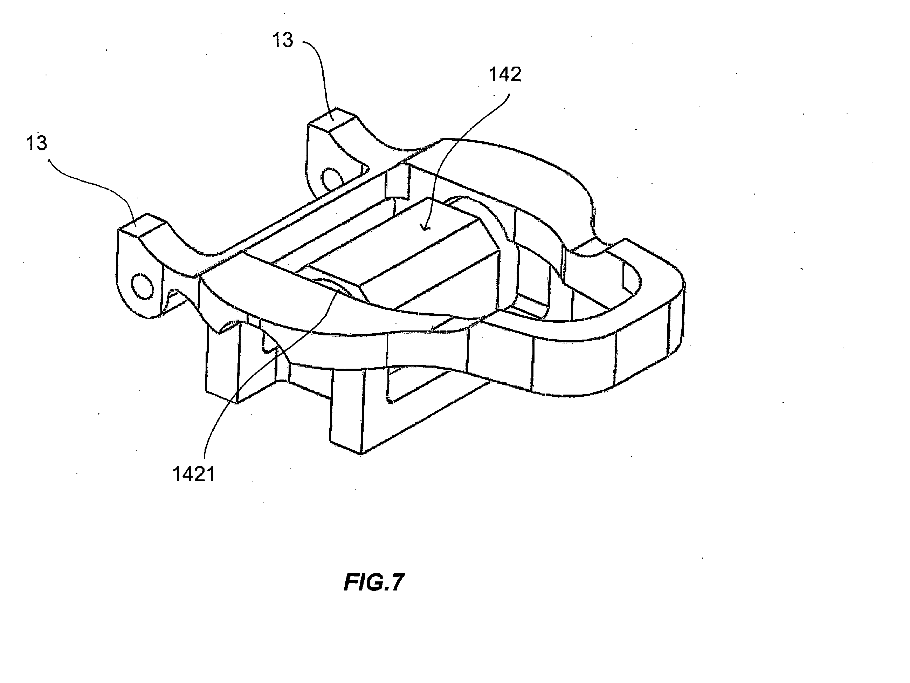

Referring to next Figures 4-7, it is shown the body 1 in which, into the central component 142, a bore is obtained, denoted in figure by reference number 1421.

Always referring to Figures 4-7, also in the block-like members 13 respective through bores are obtained, needed for the defining of a seat within which it is arranged the pin required for the fixing of a movable element, tilting with respect to the pedal body, with elastic return and shaped so as to anchor the cycling shoe cleat in its rear part. The details of this latter element are omitted, it being commercially available and therefore to be deemed as known art.

Within the bore 1421 a shaft (not depicted) is rotatably housed, for connection to a pedal crank of the bicycle.

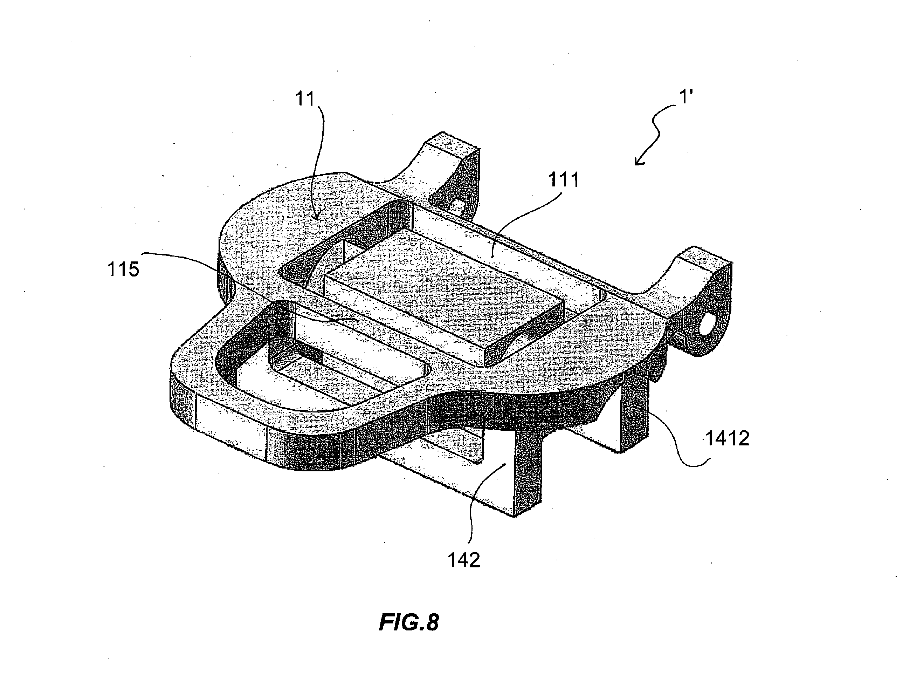

Referring to Figure 8, it is shown a body 1' subject of the present invention, according to a second preferred embodiment.

In said embodiment, the sole difference lies in that the through opening 111 defines, in this case on the resting portion 11, a substantially parallelogram-like shape by means of the presence of a connecting cross member 115. The vertical portions 1412 here are rigidly connected to the bearing top portion, substantially at the four vertexes of the parallelogram.

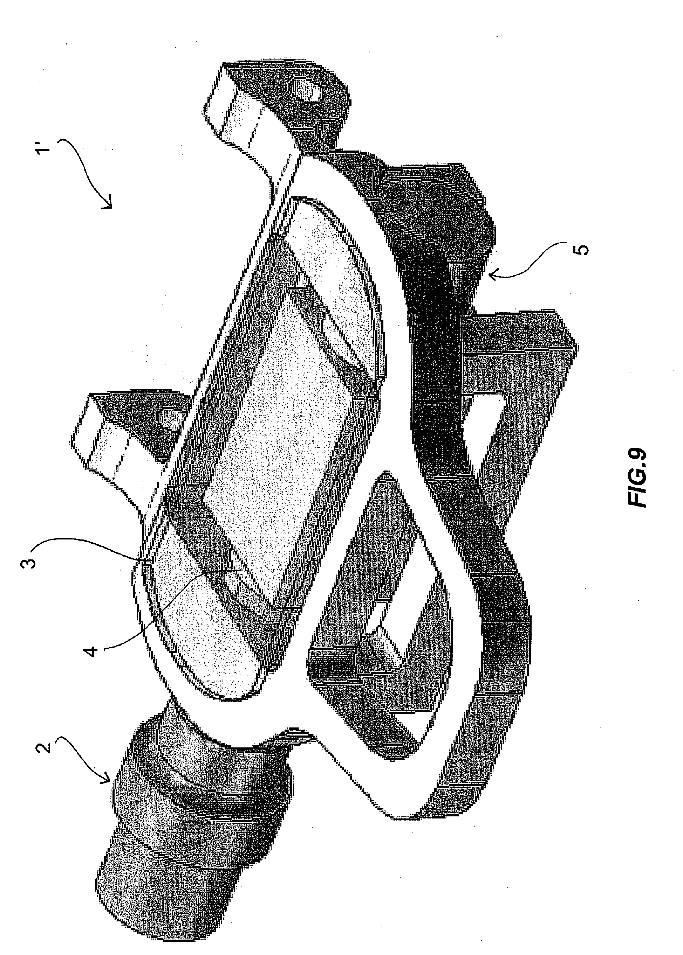

Next Figure 9 illustrates the body 1' subject of the invention; this time the shaft for connection to a pedal crank is depicted, shaft denoted in figure by reference number 2. Moreover, the body 1' comprises a load transmission plate 3, positioned on the through opening and connected to the resting portion at the peripheral area thereof.

It is understood that the shaft 2 is housed within the body according to the first preferred embodiment in a wholly analogous manner, as well as in a wholly analogous manner also the plate 3 will be positioned thereon, as well as the anchoring element tilting in the rear part.

Always referring to Figure 9, the shaft 2 is preferably housed within the central component by use of two circular ring nuts 4, 5. The external ring nut 5 has a closure bottom and is partly threaded on an outer skirt thereof. The internal ring nut 4 is instead comprised only of a hollow cylindrical element, and also the former is partly threaded on the outer skirt thereof. Said ring nuts are screwed on the cylindrical wall in the internal zone of the central component, in order to block the bearing positioned therein and therefore the shaft 2.

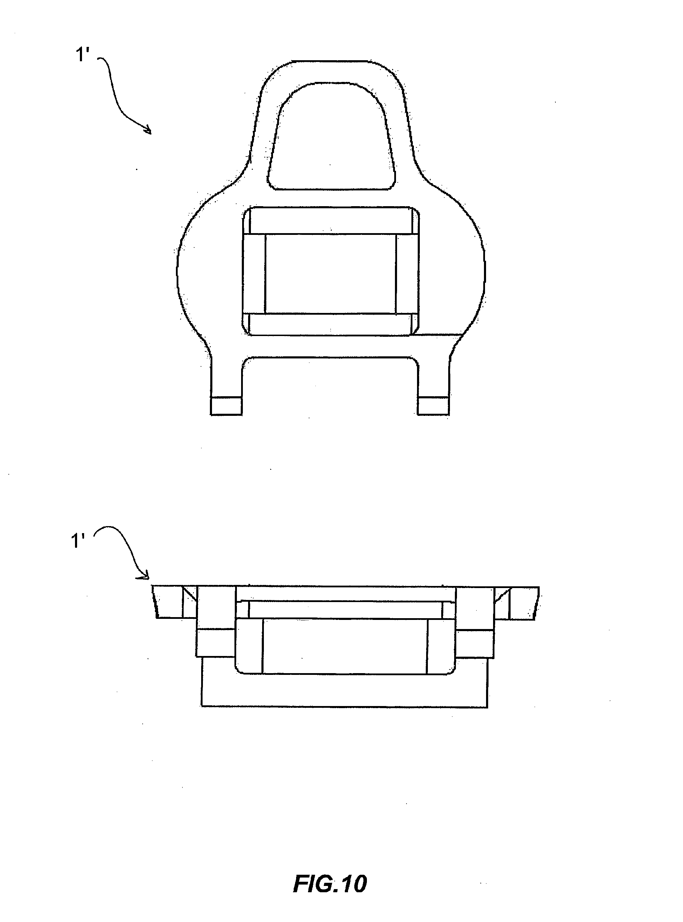

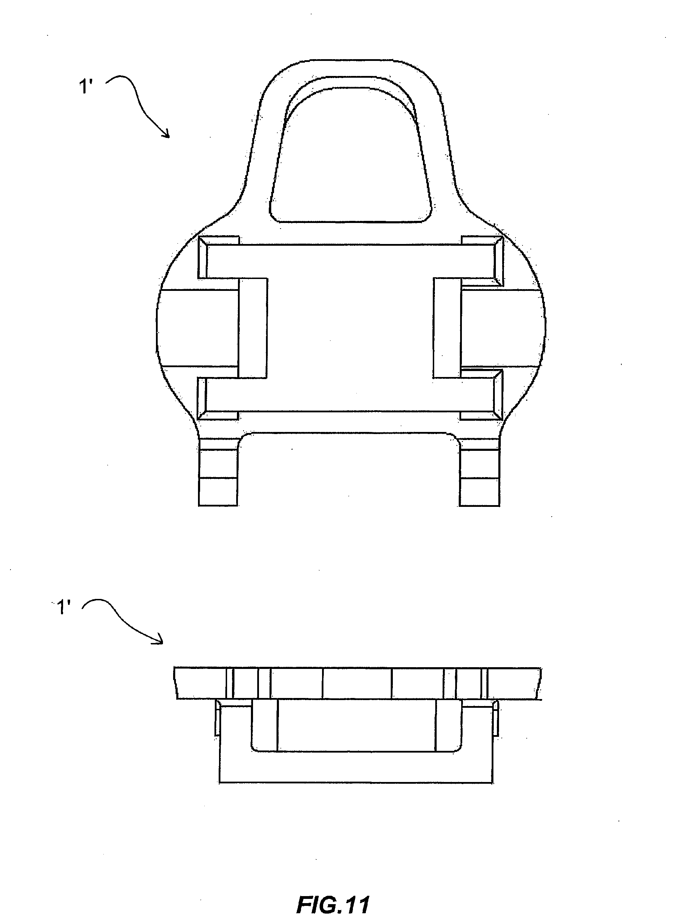

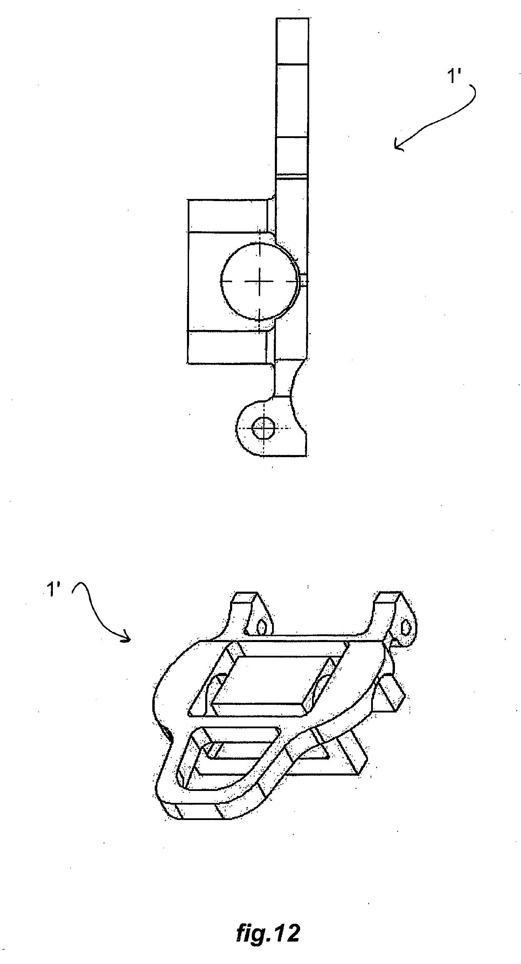

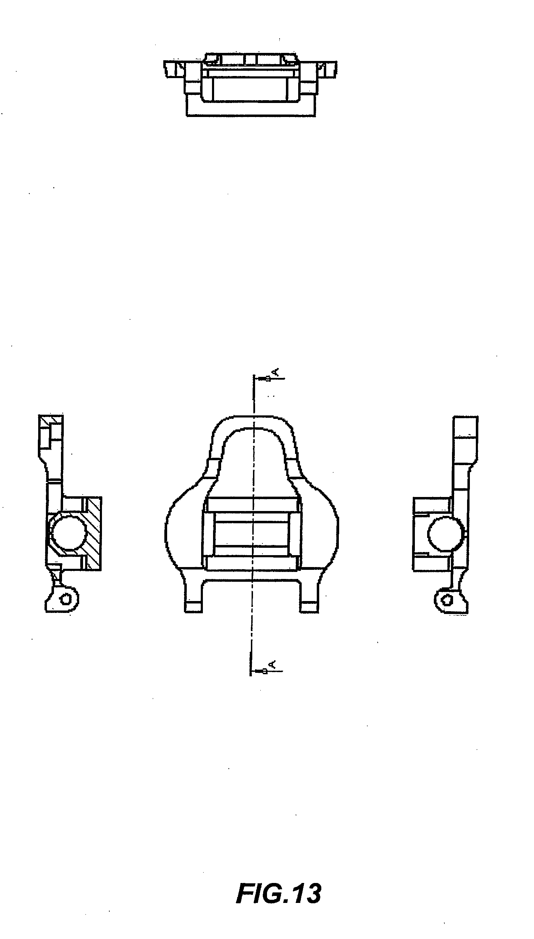

Figures 10-12 show in various views the body 1' according to the second preferred embodiment, whereas Figure 13 affords the same views with regard to the body 1 of said first embodiment.

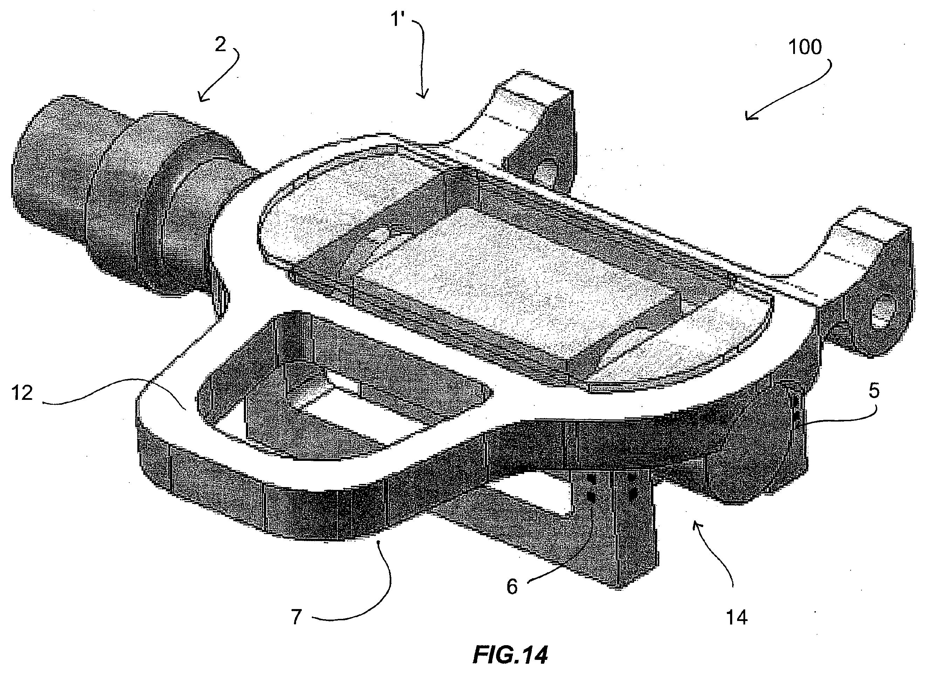

Referring now to next Figure 14, an instrumented pedal is shown, it also subject of the present invention, denoted by reference number 100.

It is understood that each bicycle will be equipped with a pair of instrumented pedals 100. The description of the invention anyhow addresses one pedal only, since the other one pedal of the pair is alike thereto in any aspect.

In particular, the instrumented pedal 100 comprises the body 1' complete with shaft 2 rotatably housed therein. The pedal further comprises means for detecting a quantity related to a pedal stroke performed by a cyclist, coupled to the body 1', and processing means (not reported in figure) associated to the detecting means, housed on the pedal 100 and configured to return a quantity indicative of power and a quantity indicative of pedal stroke efficiency. In particular, the detecting means comprises first measuring means configured for detecting an angular position of the shaft 2 with respect to the body 1'.

, Such first measuring means preferably comprises an encoder (not visible) positioned within the external ring nut 5, placed at one end of the shaft 2. Such an electronic component is known in the state of the art, therefore the technical contrivances needed for a practical implementation thereof will not be discussed hereinafter.

The detecting means further comprises second measuring means, configured to be able to detect a deformation of the bottom block 14.

The second measuring means comprises a plurality of extensimeters 6 positioned on the four vertical portions, so as to be able to trace, depending on the deformation produced on such portions, the load applied by the cyclist onto the top resting portion. In particular, the set of extensimeters 6 comprises plural sets of extensimeters, the extensimeters of each set being electrically connected therebetween by a Wheatstone bridge circuit diagram, so that each set be suitable for the measurement of a respective component of the force exerted on the resting portion with respect to a predefined reference system.

Upon detecting such quantities comprising the vector of the applied force and the relative angle existing between resting portion and shaft, the processing means is just configured to acquire such quantities, process them and return information useful to determine power and pedal stroke efficiency.

Such means, implemented by electronic components placed on the pedal preferably within a seat 7 upperly delimited by the C-shaped coupling 12, transmit such information, preferably by a wireless-type connection, to a receiving station, e.g. a display unit placed on the handlebar of the bicycle itself. Thus, the cyclist has the option of monitoring and assessing in real time what is the power and the efficiency of his/her pedal stroke.

In particular, signals obtained by the sensing elements integral to the pedal are then amplified and suitably conditioned to be digitalized by a system built in the pedal.

The electronic components are able to acquire data coming from the sensors built in the pedal and from the encoder, process these signals so as to obtain therefrom values of total force applied and tangent to the pedal crank, calculate the contribution of useful torque for each single leg obtained as product of the tangent force by the pedal crank arm, and calculate the instantaneous power obtained multiplying the torque by angular velocity, this latter data derived from variation over time of the angular position measured.

Moreover, the electronic components aboard the pedal are provided with local memory on which to accumulate data measured and calculated on a pedal stroke cycle, which are used at the end of the same cycle to calculate synthetic data, such as the useful and effective power averaged on the pedal stroke cycle. Synthetic data are finally sent by a transceiver system, it also installed aboard, to the external unit, preferably by a proprietary protocol or by one of the most widely used standard protocols for transmission of power data related to a bicycle.

As mentioned, a data display unit completing the system is mounted on the bicycle handlebar and is preferably configured to receive, beside data from pedals needed to provide power data, also data from sensors of other type, such as heart rate monitor strap, rate measurer, speedometer, etc.

It is understood that what was stated for the instrumented pedal 100 holds true in an absolutely equivalent manner in case it comprises the body according to the first embodiment.

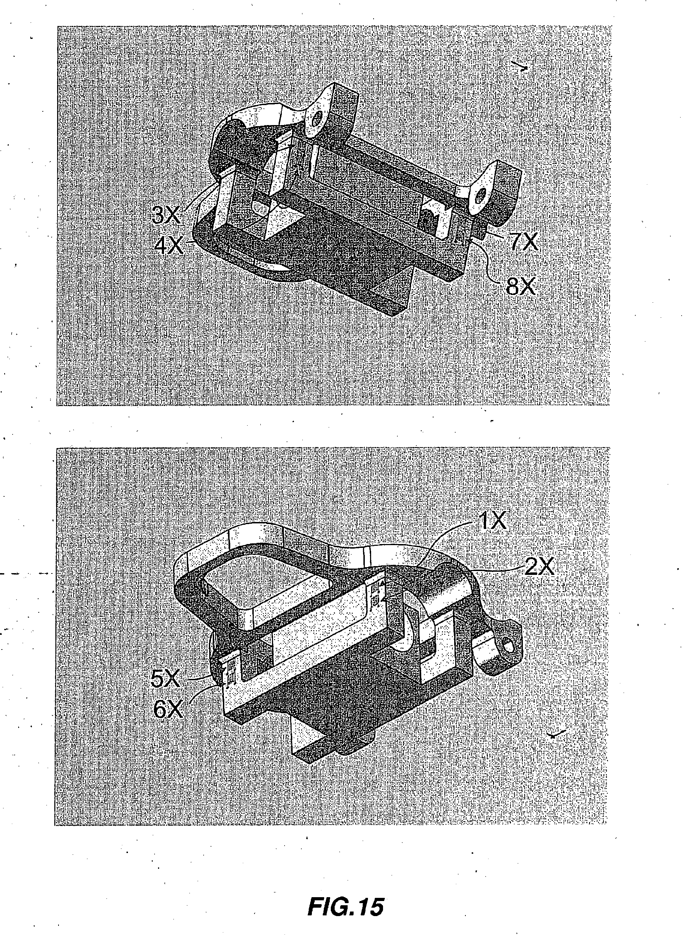

Referring to Figures 15-20, a mode of applying extensimeters to the bottom block of the instrumented pedal for the measurement of deformations is illustrated by way of example and not for limitative purposes.

As explained in the foregoing, force exerted by the cyclist's foot is transferred by the cleat to the resting surface, which in turn distributes the load on the bottom block. From the latter two, the force is transmitted on the vertical portions constituting the sensitive part of the pedal, i.e. the zones whose deformation is to be monitored; in the bottom part they are integral to the central component which houses shaft and bearing. To monitor deformation at some sections of said portions, extensimeters are used whose resistance varies with deformation, and therefore with the force applied. Extensimeters are fastened on the sensitive sections in a suitable manner and position, and connected according to a Wheatstone bridge diagram. This type of circuit allows to measure electrical resistance variations as voltage output therefrom. The reaction existing between force applied and voltage Vout measured at the output of the circuit can, generally speaking, be approximated according to the law:

$$F = A \times V_{out}$$

where A is a proportionality coefficient between applied force and measured voltage. Since three force components have to be measured, three sets of extensimeters will be needed, each appointed to the measurement of one of the components Fx, Fy, Fz. Of course, it follows that three independent Wheatsone bridge circuits will be needed, each one sensitive only and exclusively to the applying of one of the force components mentioned. As to the force component Fx, i.e. directed along the anteroposterior axis of the pedal with a sense concordant with the running direction of the bicycle with the pedal parallel to the ground, eight extensimeters are needed, positioned on the sensitive sections of the pedal body as illustrated in Figure 15.

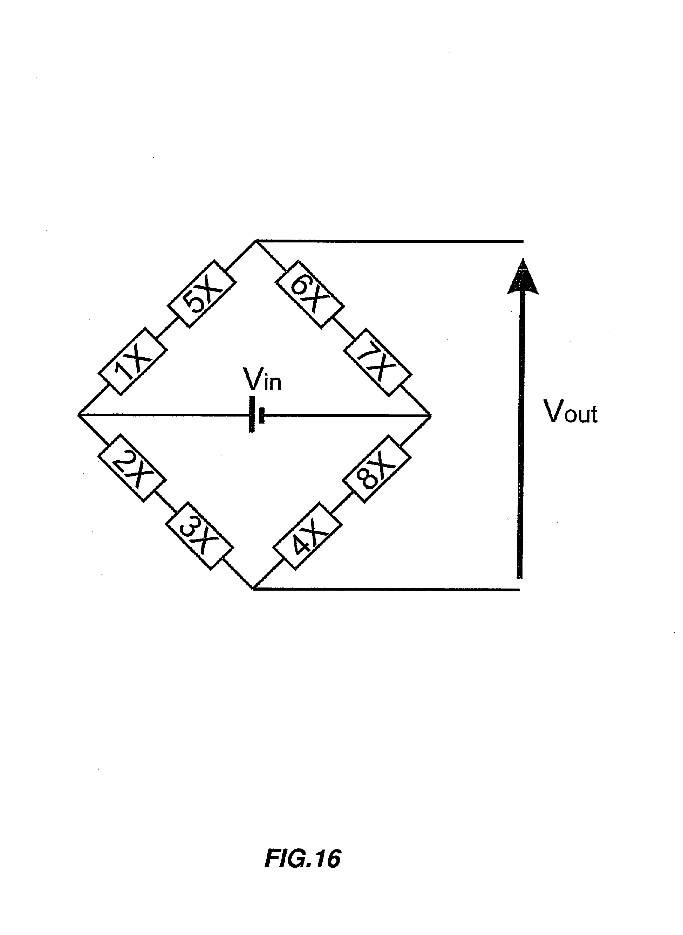

The extensimeters are arranged in pairs of two, each on a different sensitive element of the four available; in particular, they are positioned on the zones facing the front part of the pedal and toward the rear face thereof.
The extensimeters are also fixed with their main direction of deformation lying along the perpendicular of the pedal loading plane, on the face of the sensitive section considered.
The eight extensimeters are connected to each other according to the configuration reported in Figure 16.
By supplying the Wheatstone bridge with an input voltage V, a voltage output of the circuit equal to:

$$\frac{V_{out}}{V} = k\left(\frac{\Delta 1X}{1X} - \frac{\Delta 2X}{2X} - \frac{\Delta 3X}{3X} + \frac{\Delta 4X}{4X} + \frac{\Delta 5X}{5X} - \frac{\Delta 6X}{6X} - \frac{\Delta 7X}{7X} + \frac{\Delta 8X}{8X}\right)$$

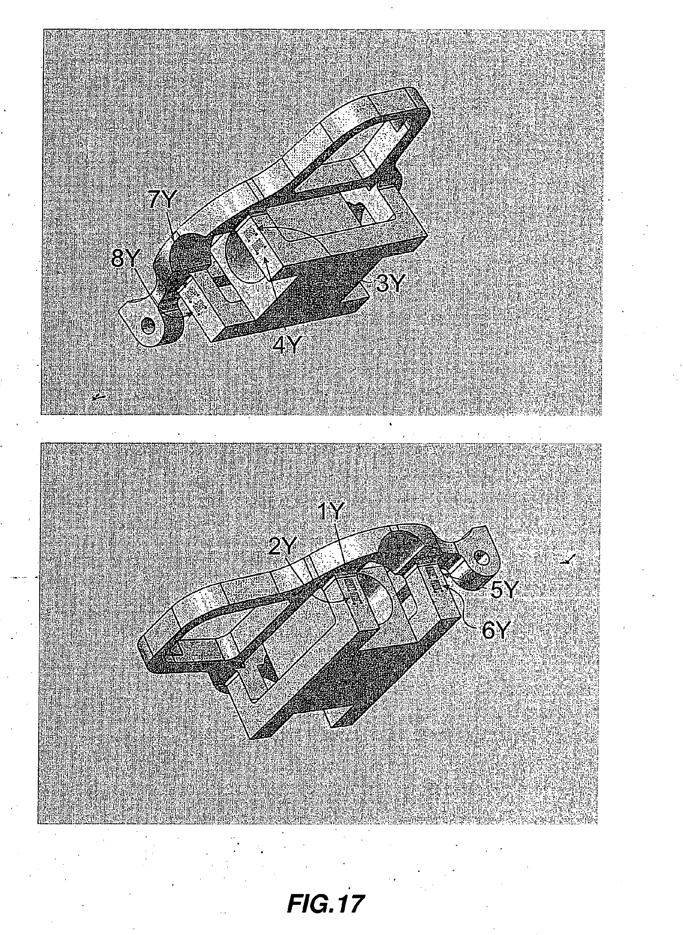

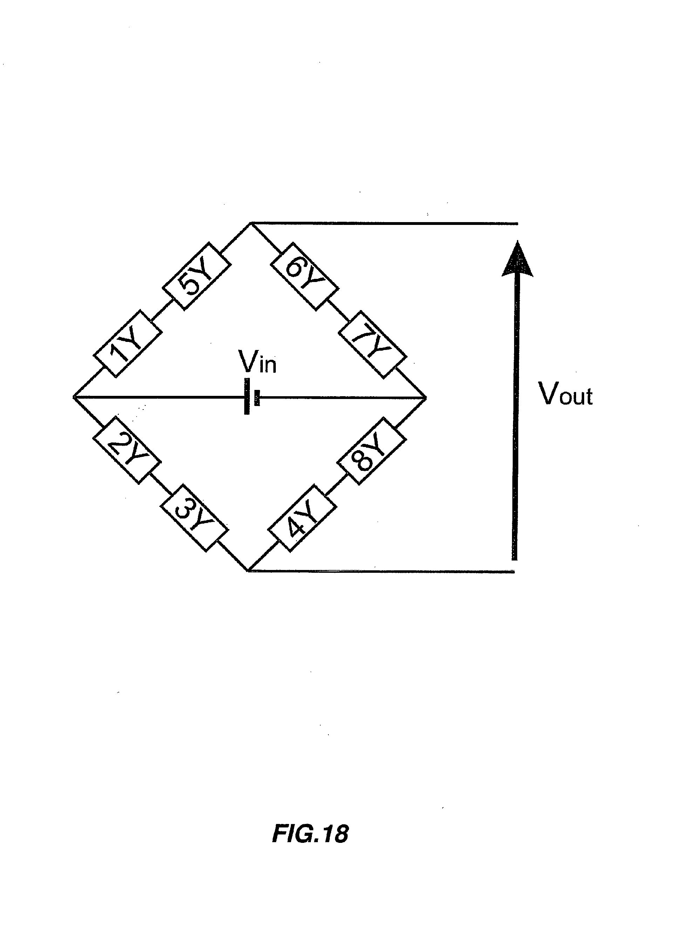

is obtained, (1X, 2X, 3X, 4X, 5X, 6X, 7X, 8X) being the values of the electrical resistances of the extensimeters at rest, ($\Delta 1X$, $\Delta 2X$, $\Delta 3X$, $\Delta 4X$, $\Delta 5X$, $\Delta 6X$, $\Delta 7X$, $\Delta 8X$) the values of the corresponding variations of electrical resistance under effect of component Fx, V the supply voltage of the bridge, Vout the voltage measured at the output of the circuit and k a proportionality constant.
Since, due to how the pedal body has been drawn and designed, under the action of a component Fx the sensitive zones will tend to deform so that as a consequence the extensimeters 1X, 4X, 5X and 8X deform in a manner equal and opposite to the extensimeters 2X, 3X, 6X and 7X, there results a value of the second term of the expression overall different from zero, and therefore Vout will be non-nil and proportional to V.
Under the action of all other components of force and torque in space applicable to the pedal plane, the contribution to the second term will instead be nil, and therefore Vout will be equal to zero. There results a channel sensitive exclusively to quantity Fx.
As to the force component Fy, i.e. directed along the median-lateral axis of the pedal toward the center of the bicycle, with the running direction of the bicycle with the pedal parallel to the ground, eight new extensimeters are needed, positioned on the sensitive sections of the pedal body as illustrated in Figure 17.
The extensimeters are arranged in pairs of two, each on a different sensitive element of the four available; in particular, they are positioned on the zones facing the right and left sides of the pedal. The extensimeters are further fixed with their main direction of deformation lying along the perpendicular of the pedal loading plane, on the face of the sensitive section considered.
The eight extensimeters are connected to each other according to the configuration reported in Figure 18.
By supplying the Wheatstone bridge with an input voltage V, a voltage output of the circuit equal to:

$$\frac{V_{out}}{V} = k\left(\frac{\Delta 1Y}{1Y} - \frac{\Delta 2Y}{2Y} - \frac{\Delta 3Y}{3Y} + \frac{\Delta 4Y}{4Y} + \frac{\Delta 5Y}{5Y} - \frac{\Delta 6Y}{6Y} - \frac{\Delta 7Y}{7Y} + \frac{\Delta 8Y}{8Y}\right)$$

is obtained, (1Y, 2Y, 3Y, 4Y, 5Y, 6Y, 7Y, 8Y) being the values of the electrical resistances of the extensimeters at rest, ($\Delta 1Y$, $\Delta 2Y$, $\Delta 3Y$, $\Delta 4Y$, $\Delta 5Y$, $\Delta 6Y$, $\Delta 7Y$, $\Delta 8Y$) the values of the corresponding variations of electrical resistance under effect of component Fy, V the supply voltage of the bridge, Vout the voltage measured at the output of the circuit and k a proportionality constant.

Since, due to how the pedal body has been drawn and designed, under the action of a component Fy the sensitive zones will tend to deform so that as a consequence the extensimeters 1Y, 4Y, 5Y and 8Y deform in a manner equal and opposite to the extensimeters 2Y, 3Y, 6Y and 7Y, there results a value of the second term of the expression overall different from zero, and therefore Vout will be non-nil and proportional to V. Under the action of all other components of force and torque in space applicable to the pedal plane, the contribution to the second term will instead be nil, and therefore Vout will be equal to zero. There results a channel sensitive exclusively to quantity Fy.

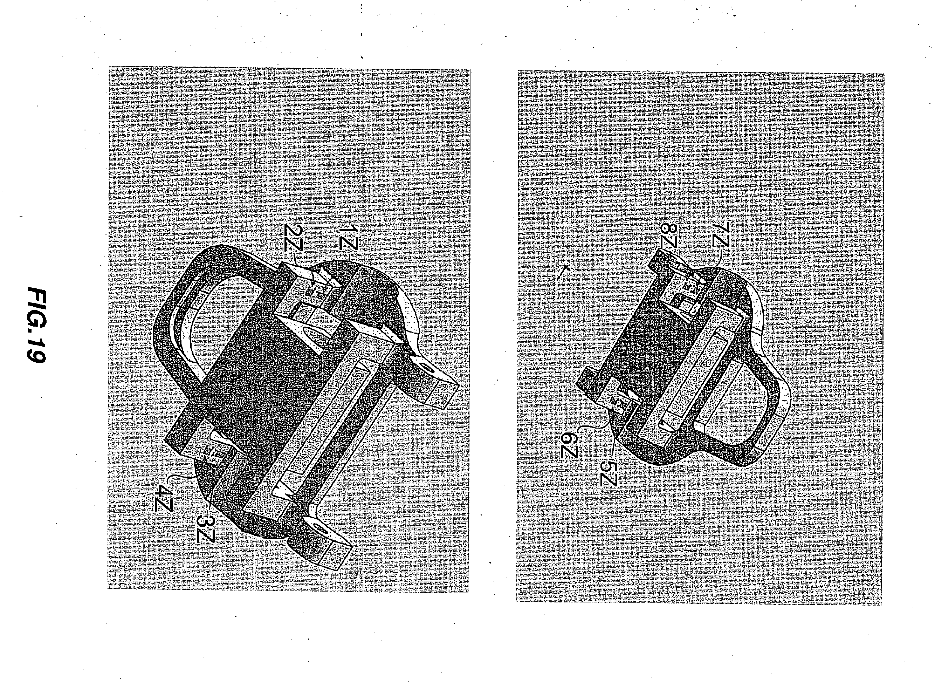

As to the force component Fz, i.e. directed along the axis perpendicular to the loading plane of the pedal toward the ground with the pedal parallel to the ground itself, further eight extensimeters are needed, positioned on the sensitive sections of the pedal body as illustrated in Figure 19.

The extensimeters are arranged in pairs of two, each on a different sensitive element of the four available; in particular, they are positioned on the zones facing the internal part of the pedal. The extensimeters 1Z, 3Z, 5Z and 7Z are fixed with their main direction of deformation lying along the perpendicular of the pedal loading plane, on the face of the sensitive section considered, whereas the extensimeters 2Z, 4Z, 6Z and 8Z are fixed with their main direction of deformation lying perpendicularly to the preceding ones.

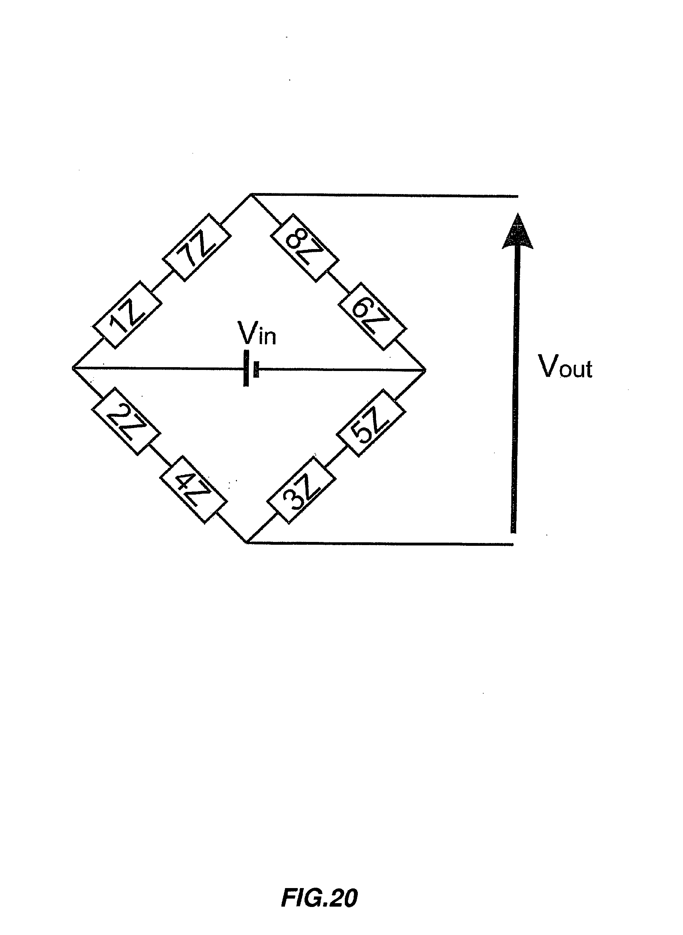

The eight extensimeters are connected to each other according to the configuration reported in Figure 20.

By supplying the Wheatstone bridge with an input voltage V, a voltage output of the circuit equal to:

$$\frac{V_{out}}{V} = k\left(\frac{\Delta 1Z}{1Z} - \frac{\Delta 2Z}{2Z} - \frac{\Delta 3Z}{3Z} + \frac{\Delta 4Z}{4Z} + \frac{\Delta 5Z}{5Z} - \frac{\Delta 6Z}{6Z} - \frac{\Delta 7Z}{7Z} + \frac{\Delta 8Z}{8Z}\right)$$

is obtained, (1Z, 2Z, 3Z, 4Z, 5Z, 6Z, 7Z, 8Z) being the values of the electrical resistances of the extensimeters at rest, (Δ1Z, Δ2Z, Δ3Z, Δ4Z, Δ5Z, Δ6Z, Δ7Z, Δ8Z) the values of the corresponding variations of electrical resistance under the effect of component Fz, V the supply voltage of the bridge, Vout the voltage measured at the output of the circuit V, and k a proportionality constant.

Since, due to how the pedal body has been drawn and designed, under the action of a component Fz the sensitive zones will tend to deform so that as a consequence the extensimeters 1Z, 3Z, 5Z and 7Z deform in a manner equal to each other and the extensimeters 2Z, 4Z, 6Z and 8Z deform in a manner equal to each other but opposite and proportional to the preceding ones, there results a value of the second term of the expression overall different from zero, and therefor Vout will be non-nil and proportional to V.

Under the action of all other components of force and torque in space applicable to the pedal plane, the contribution to the second term will instead be nil, and therefore Vout will be equal to zero. There results a channel sensitive exclusively to quantity Fz.

The present invention has been hereto described with reference to two preferred embodiments thereof. It is understood that other embodiments might exist, all falling within the concept of the same invention, and all comprised within the protective scope of the claims hereinafter.

**Claims**

1.  A body (1, 1') for instrumented pedal (100) for a bicycle or the like, comprising:

> • a foot resting top portion (11) apt to define a plane base and having a through opening (111) such as to delimit a peripheral area (112) thereof;
> • a bottom block (14) comprising:
>
> > - a pair of elements (141) each one being substantially U-shaped, each element (141) having a longitudinal cross member (1411) arranged parallelly to said plane base and a pair of vertical portions (1412) rigidly connected thereto substantially at said peripheral area (112); said vertical portions (1412) defining four deformation measuring regions associated to a pedal stroke load, said longitudinal cross members (1411) being parallel therebetween and configured so as to be contained within a port defined by said through opening (111);
> > - a central component (142) interposed between said pair of U-shaped members (141) and connected thereto along the respective longitudinal cross members (1411), said central component (142) being it also contained within the port defined by said through opening (111);

**characterised in that** said body (1, 1') is manufactured in one piece.

2. The body (1') for instrumented pedal (100) according to the preceding claim, wherein said through opening (111) defines on said resting portion (11) a substantially parallelogram shape.

3. The body (1') for instrumented pedal (100) according to the preceding claim, wherein each vertical portion (1412) is connected to said resting portion (11) substantially at a respective vertex of the parallelogram.

4. The body (1) according to claim 1, wherein said through opening (111) gives to said peripheral area (112) a substantially C-like shape.

5. The body (1, 1') for instrumented pedal (100) according to one of the preceding claims, wherein said central component (142) is spaced from said plane base.

6. The body (1, 1') for instrumented pedal (100) according to any one of the preceding claims, wherein said resting top portion (11) comprises coupling/releasing means (12, 13) for a cycling shoe.

7. The body (1, 1') for instrumented pedal (100) according to any one of the preceding claims, further comprising a load transmission plate (3), positioned on said through opening (111) and connected to said resting portion (11) at said peripheral area (112).

8. The body (1, 1') for instrumented pedal (100) according to any one of the preceding claims, wherein said central component (142) has a through bore (1421) obtained along a direction substantially parallel to said longitudinal cross members (1411).

9. The body (1, 1') for instrumented pedal (100) according to the preceding claim, further comprising a shaft (2) rotatably housed within said bore (1421), said shaft (2) being associable to a pedal crank of a bicycle.

10. A production process of a body (1, 1') for instrumented pedal associable to a pedal crank of a bicycle, comprising the steps of:

   • manufacturing a body (1, 1') according to any one of the claims 1 to 7;
   • making a bore (1421) within said component (142) along a direction substantially parallel to said longitudinal cross members (1411).
   • rotatably housing a shaft (2) within said bore (1421).

11. The production process according to the preceding claim, wherein said body (1, 1') is manufactured by molding.

12. The production process according to claims 8 or 9, wherein said bore (1421) is made on said component (14) by chip-forming machining.

13. An instrumented pedal (100) for bicycle or the like, comprising:

   • a body (1, 1') according to claim 9;
   • means (5, 6) for detecting a quantity related to a pedal stroke performed by a cyclist, said means (5, 6) being coupled to said body (1, 1');
   • processing means associated to said detecting means (5, 6), housed on said pedal (100) and configured to return a quantity indicative of power and a quantity indicative of pedal stroke efficiency.

14. The instrumented pedal (100) according to the preceding claim, wherein said detecting means (5, 6) comprises first measuring means (5) configured for detecting an angular position of said shaft (2) with respect to said body (1, 1').

15. The instrumented pedal (100) according to the preceding claim, wherein said first measuring means (5) comprises an encoder (5) positioned at an end of said shaft (2).

16. The instrumented pedal (100) according to one of the claims 13 to 15, wherein said detecting means (5, 6) comprises second measuring means (6) configured for detecting a deformation of said bottom block (14).

**17.** The instrumented pedal (100) according to the preceding claim, wherein said second measuring means (6) comprises a plurality of extensimeters (6) positioned on said four measuring regions so as to detect a force exerted by the cyclist on said resting top portion (11).

**18.** The instrumented pedal (100) according to the preceding claim, wherein said plurality of extensimeters (6) comprises plural sets of extensimeters, the extensimeters (6) of each set being connected therebetween by a Wheatstone bridge circuit diagram, each set being apt to measure a respective component of the force exerted with respect to a predefined reference system.

**19.** The instrumented pedal (100) according to one of the claims 13 to 18, wherein said processing means is configured to return said quantity indicative of power and said quantity indicative of pedal stroke efficiency to a remote unit in wireless mode.

**Patentansprüche**

**1.** Körper (1, 1') für ein instrumentiertes Pedal (100) für ein Fahrrad, oder dergleichen, der umfasst:

• einen oberen Teil einer Fußraste (11), der geeignet ist, um eine ebene Unterlage zu definieren und über eine Durchgangsöffnung (111) verfügt, um so einen peripheren Bereich (112) davon abzugrenzen;
• einen unteren Block (14), der umfasst:

- ein Paar von Elementen (141), von denen jedes im Wesentlichen U-förmig ist, wobei jedes Element (141) über einen longitudinalen Querträger (1411), der parallel zu der ebenen Unterlage angeordnet ist, und ein Paar von vertikalen Teilen (1412) verfügt, das daran im Wesentlichen bei dem peripheren Bereich (112) fest verbunden ist; wobei die vertikalen Teile (1412) vier Verformungsmessbereiche definieren, die mit einer Pedalzutrittslast verknüpft sind, wobei die longitudinalen Querträger (1411) parallel dazwischen angeordnet und geeignet sind, in einem Port enthalten zu sein, der durch die Durchgangsöffnung (111) definiert wird;
- eine zentrale Komponente (142), die zwischen dem Paar von U-förmigen Teilen (141) zwischengeschaltet und daran entlang des entsprechenden longitudinalen Querträgers (1411) befestigt ist, wobei die zentrale Komponente (142) ebenfalls in dem Port enthalten ist, der durch die Durchgangsöffnung (111) definiert wird; **dadurch gekennzeichnet, dass** der Körper (1, 1') in einem Stück hergestellt wird.

**2.** Körper (1') für ein instrumentiertes Pedal (100) gemäß dem vorangehenden Anspruch, wobei die Durchgangsöffnung (111) auf dem Rastenteil (11) eine im Wesentlichen Parallelogramm-Form definiert.

**3.** Körper (1') für ein instrumentiertes Pedal (100) gemäß dem vorangehenden Anspruch, wobei jeder vertikale Teil (1412) im Wesentlichen bei einem entsprechenden Scheitel des Parallelogramms an dem Rastenteil (11) befestigt ist.

**4.** Körper (1) gemäß Anspruch 1, wobei die Durchgangsöffnung (111) dem peripheren Bereich (112) eine im Wesentlichen C-artige Form verleiht.

**5.** Körper (1, 1') für ein instrumentiertes Pedal (100) gemäß einem der vorangehenden Ansprüche, wobei die zentrale Komponente (142) mit Abstand zu der ebenen Unterlage angeordnet ist.

**6.** Körper (1, 1') für ein instrumentiertes Pedal (100) gemäß einem der vorangehenden Ansprüche, wobei der obere Teil der Raste (11) ein Kopplungs-/Entkopplungsmittel (12, 13) für einen Radsportschuh umfasst.

**7.** Körper (1, 1') für ein instrumentiertes Pedal (100) gemäß einem der vorangehenden Ansprüche, der weiterhin umfasst: eine Lastübertragungsplatte (3), die auf der Durchgangsöffnung (111) positioniert ist und an dem Rastenteil (11) bei dem peripheren Bereich (112) befestigt ist.

**8.** Körper (1, 1') für ein instrumentiertes Pedal (100) gemäß einem der vorangehenden Ansprüche, wobei die zentrale Komponente (142) über eine Durchgangsbohrung (1421) verfügt, die entlang einer Richtung erhalten wird, die im Wesentlichen parallel zu den longitudinalen Querträgern (1411) verläuft.

**9.** Körper (1, 1') für ein instrumentiertes Pedal (100) gemäß dem vorangehenden Anspruch, der weiterhin umfasst:

eine Welle (2), die drehbar in der Bohrung (1421) untergebracht ist, wobei die Welle (2) mit einer Tretkurbel eines Fahrrads verknüpfbar ist.

10. Herstellungsverfahren eines Körpers (1, 1') für ein instrumentiertes Pedal, das mit einer Tretkurbel eines Fahrrads verknüpfbar ist, das die folgenden Schritte umfasst:

- Herstellung eines Körpers (1, 1') gemäß einem der Ansprüche 1 bis 7;
- Vornehmen einer Bohrung (1421) in die Komponente (142) entlang einer Richtung, die im Wesentlichen parallel zu den longitudinalen Querträgern (1411) verläuft;
- drehbare Unterbringung einer Welle (2) in der Bohrung (1421).

11. Herstellungsverfahren gemäß dem vorangehenden Anspruch, wobei der Körper (1, 1') durch Gießen hergestellt wird.

12. Herstellungsverfahren gemäß den Ansprüchen 8 oder 9, wobei die Bohrung (1421) auf der Komponente (14) durch eine spanende Verarbeitung vorgenommen wird.

13. Instrumentiertes Pedal (100) für Fahrräder, oder dergleichen, das umfasst:

- einen Körper (1, 1') gemäß Anspruch 9;
- Mittel (5, 6) zur Erfassung einer Quantität eines Pedalantritts, der durch einen Radfahrer durchgeführt wird, wobei das Mittel (5, 6) an dem Körper (1, 1') befestigt ist;
- Verarbeitungsmittel, das mit dem Erfassungsmittel (5, 6) verknüpft ist, das auf dem Pedal (100) untergebracht und geeignet ist, eine Quantität, die eine Leistung anzeigt, und eine Quantität, die eine Pedalantrittseffizienz anzeigt, zurückzusenden.

14. Instrumentiertes Pedal (100) gemäß dem vorangehenden Anspruch, wobei das Erfassungsmittel (5, 6) umfasst: ein erstes Messmittel (5), das geeignet ist, eine Winkelneigung der Welle (2) bezüglich des Körpers (1, 1') zu erfassen.

15. Instrumentiertes Pedal (100) gemäß dem vorangehenden Anspruch, wobei das erste Messmittel (5) umfasst: einen Encoder (5), der an einem Ende der Welle (2) positioniert ist.

16. Instrumentiertes Pedal (100) gemäß einem der Ansprüche 13 bis 15, wobei das Erfassungsmittel (5, 6) umfasst: ein zweites Messmittel (6), das geeignet ist, eine Deformation des unteren Blocks (14) zu erfassen.

17. Instrumentiertes Pedal (100) gemäß dem vorangehenden Anspruch, wobei das zweite Messmittel (6) umfasst: eine Mehrzahl von Längenänderungsmessern (6), die auf den vier Messbereichen positioniert sind, um so eine Kraft zu erfassen, die durch den Radfahrer auf das obere Teil der Raste (11) ausgeübt wird.

18. Instrumentiertes Pedal (100) gemäß dem vorangehenden Anspruch, wobei die Mehrzahl von Längenänderungsmessern (6) umfasst: mehrere Sätze von Längenänderungsmessern, wobei die Längenänderungsmesser (6) eines jeden Satzes dazwischen durch ein Wheatstone-Brückenschaltdiagramm verbunden sind, wobei jeder Satz geeignet ist, eine entsprechende Komponente der Kraft zu messen, die bezüglich eines vordefinierten Referenzsystems ausgeübt wird.

19. Instrumentiertes Pedal (100) gemäß einem der Ansprüche 13 bis 18, wobei das Verarbeitungsmittel geeignet ist, die Quantität, die eine Leistung anzeigt, und die Quantität, die eine Pedalantrittseffizienz anzeigt, an eine entfernte Einheit in einer drahtlosen Betriebsart zurückzusenden.

**Revendications**

1. Corps (1, 1') pour pédale instrumentée (100) pour une bicyclette ou similaire, comprenant :

- une partie supérieure de repose pied (11) apte à définir une base plane et ayant une ouverture débouchante (111) afin de délimiter sa zone périphérique (112) ;
- un bloc inférieur (14) comprenant :

  - une paire d'éléments (141), chacun étant sensiblement en forme de U, chaque élément (141) ayant une traverse longitudinale (1411) agencée parallèlement à ladite base plane et une paire de parties verticales (1412) rigidement raccordées à cette dernière sensiblement au niveau de ladite zone périphérique (112) ; lesdites parties verticales (1412) définissant quatre régions de mesure de déformation associées à une charge de course de pédale, lesdites traverses longitudinales (1411) étant parallèles entre elles et configurées afin d'être contenues à l'intérieur d'un orifice défini par ladite ouverture débouchante (111);
- un composant central (142) intercalé entre ladite paire d'éléments en forme de U (141) et raccordé à ces derniers le long des traverses longitudinales (1411) respectives, ledit composant central (142) étant lui aussi contenu à l'intérieur de l'orifice défini par ladite ouverte débouchante (111) ;
**caractérisé en ce que** ledit corps (1, 1') est fabriqué d'un seul tenant.

2. Corps (1') pour pédale instrumentée (100) selon la revendication précédente, dans lequel ladite ouverture débouchante (111) définit, sur ladite partie de repos (11), une forme sensiblement parallélogramme.

3. Corps (1') pour pédale instrumentée (100) selon la revendication précédente, dans lequel chaque partie verticale (1412) est raccordée à ladite partie de repos (11) sensiblement à un sommet respectif du parallélogramme.

4. Corps (1) selon la revendication 1, dans lequel ladite ouverture débouchante (111) donne, à ladite zone périphérique (112), une forme sensiblement de C.

5. Corps (1, 1') pour pédale instrumentée (100) selon la revendication précédente, dans lequel ledit composant central (142) est espacé de ladite base plane.

6. Corps (1, 1') pour pédale instrumentée (100) selon l'une quelconque des revendications précédentes, dans lequel ladite partie supérieure de repos (11) comprend des moyens de couplage/libération (12, 13) pour une chaussure de cyclisme.

7. Corps (1, 1') pour pédale instrumentée (100) selon l'une quelconque des revendications précédentes, comprenant en outre une plaque de transmission de charge (3) positionnée sur ladite ouverture débouchante (111) et raccordée à ladite partie de repos (11) au niveau de ladite zone périphérique (112).

8. Corps (1, 1') pour pédale instrumentée (100) selon l'une quelconque des revendications précédentes, dans lequel ledit composant central (142) a un alésage débouchant (1421) obtenu le long d'une direction sensiblement parallèle auxdites traverses longitudinales (1411).

9. Corps (1, 1') pour pédale instrumentée (100) selon la revendication précédente, comprenant en outre un arbre (2) logé en rotation à l'intérieur dudit alésage (1421), ledit arbre (2) pouvant être associé à une manivelle de pédale d'une bicyclette.

10. Procédé de production d'un corps (1, 1') pour pédale instrumentée pouvant être associée à une manivelle de pédale d'une bicyclette, comprenant les étapes consistant à :

   • fabriquer un corps (1, 1') selon l'une quelconque des revendications 1 à 7 ;
   • réaliser un alésage (1421) à l'intérieur dudit composant (142) le long d'une direction sensiblement parallèle auxdites traverses longitudinales (1411) ;
   • loger en rotation un arbre (2) à l'intérieur dudit alésage (1421).

11. Procédé de production selon la revendication précédente, dans lequel ledit corps (1, 1') est fabriqué par moulage.

12. Procédé de production selon la revendication 8 ou 9, dans lequel ledit alésage (1421) est réalisé sur ledit composant (14) par usinage par enlèvement de copeaux.

13. Pédale instrumentée (100) pour bicyclette ou similaire, comprenant :

   • un corps (1, 1') selon la revendication 9 ;
   • des moyens (5, 6) pour détecter une quantité liée à une course de pédale réalisée par un cycliste, lesdits moyens (5, 6) étant couplés audit corps (1, 1') ;
   • des moyens de traitement associés auxdits moyens de détection (5, 6), logés sur ladite pédale (100) et configuré pour ramener une quantité indicative de puissance et une quantité indicative d'efficacité de course de pédale.

14. Pédale instrumentée (100) selon la revendication précédente, dans laquelle lesdits moyens de détection (5, 6) comprennent des premiers moyens de mesure (5) configurés pour détecter une position angulaire dudit arbre (2) par rapport audit corps (1, 1').

15. Pédale instrumentée (100) selon la revendication précédente, dans laquelle lesdits premiers moyens de mesure (5) comprennent un encodeur (5) positionné au niveau d'une extrémité dudit arbre (2).

16. Pédale instrumentée (100) selon l'une des revendications 13 à 15, dans laquelle lesdits moyens de détection (5, 6) comprennent des seconds moyens de mesure (6) configurés pour détecter une déformation dudit bloc inférieur (14).

17. Pédale instrumentée (100) selon la revendication précédente, dans laquelle lesdits seconds moyens de mesure (6) comprennent une pluralité d'extensomètres (6) positionnés sur lesdites quatre régions de mesure afin de détecter une force exercée par le cycliste sur ladite partie supérieure de repos (11).

18. Pédale instrumentée (100) selon la revendication précédente, dans laquelle ladite pluralité d'extensomètres (6) comprend plusieurs ensembles d'extensomètres, les extensomètres (6) de chaque ensemble étant raccordés entre eux par un schéma de circuit de pont de Wheatstone, chaque ensemble étant apte à mesurer une composante respective de la force exercée par rapport à un système de référence prédéfini.

19. Pédale instrumentée (100) selon l'une des revendications 13 à 18, dans laquelle lesdits moyens de traitement sont configurés pour ramener ladite quantité indicative de puissance et ladite quantité indicative d'efficacité de course de pédale à une unité à distance en mode sans fil.

**FIG.1**

EP 2 635 486 B1

**FIG.2**

**FIG.3**

*FIG.4*

EP 2 635 486 B1

**FIG.5**

EP 2 635 486 B1

**FIG.6**

**FIG.7**

**FIG.8**

EP 2 635 486 B1

FIG.9

1'

1'

**FIG.10**

1'

1'

**FIG.11**

1'

1'

**fig.12**

**FIG.13**

FIG.14

**FIG.15**

**FIG.16**

EP 2 635 486 B1

FIG.17

29

*FIG.18*

**FIG.19**

**FIG.20**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201189940 Y